# EUROPEAN PATENT SPECIFICATION

(11) **EP 2 011 670 B1**
(45) Date of publication and mention of the grant of the patent: **06.03.2013**
(21) Application number: 08159403.8
(22) Date of filing: 01.07.2008
(51) Int. Cl.: B60B 33/00, B60B 33/02

(54) **Fixing of wheel**
Befestigung für ein Rad
Fixation de roue

(30) Priority: 05.07.2007 FI 20070528
(43) Date of publication of application: 07.01.2009
(73) Proprietor: Merivaara Oy, 15150 Lahti (FI)
(72) Inventor: Jääskeläinen, Tuomo, FI-15340, Lahti (FI)
(74) Representative: Tanhua, Pekka Vilhelm

(56) References cited:
- WO-A-03/020536
- DE-A1- 10 105 614
- DE-U1-202004 006 501

## Description

The invention relates to a wheel fixing arrangement according to the preamble of claim 1. Such an arrangement is known from DE 20 2004 006 501 U that forms the closest prior art.

In the prior art there is known a wheel fixing arrangement, where in a frame, particularly a hospital bed frame, there is welded a vertical beam, at the lower end of which a wheel is fixed by a support arm, particularly a fastening support, around which the wheel can rotate.

A drawback in the known wheel fixing arrangement is that there are utilized structural elements that are welded together. This means a laborious assembly step, which raises the manufacturing expenses of a piece of furniture, such as a hospital bed.

An object of the invention is to eliminate the drawbacks connected to known wheel fixing arrangements. Another object of the invention is to realize a new, improved wheel fixing arrangement, by means of which the wheel support arm can be easily and simply connected in the frame of a piece of furniture, particularly a hospital bed.

The wheel fixing arrangement according to the invention is characterized by what is set forth in claim 1. The dependent claims define preferred embodiments of the wheel fixing arrangement according to the invention.

The object of the invention is a wheel fixing arrangement, by means of which a wheel is fixed turnably in the frame of a piece of furniture, particularly the frame of a hospital bed. Said wheel is connected to a support arm provided with a fastening support, and a hole is arranged through the fastening support; in connection with said hole of the fastening support, there are provided locking means for locking and releasing the rotary motion of the wheel.

According to the invention, the frame in the wheel fixing arrangement is provided with a tubular element that has an open end, and in which there is arranged a first hole for a wheel fastening support; the wheel fixing arrangement includes a sleeve element, which is arranged coaxially inside the tubular element, said sleeve element being provided with a second hole for the wheel fastening support, in which hole the fastening support is fitted through the first hole; and a locking shaft is arranged on the center axis of the sleeve element, so that it proceeds through the hole provided in the wheel fastening support; the locking shaft is in cooperation with the wheel locking means, so that by turning the shaft in one direction, the wheel is locked in a non-rotary state, and respectively by turning the shaft in the opposite direction, the wheel is again released in a rotary state.

An advantage of the invention is that the wheel together with its support arm is fixed in the frame of a piece of furniture, particularly a hospital bed, in a way that is solid and looks tidy from the outside. Another advantage of the invention is that the wheel fixing arrangement includes a relatively small number of separate elements, wherefore the manufacturing expenses are minimized.

Yet another advantage of the invention is that in the wheel fixing arrangement, the metal elements need not be connected by welding.

A further advantage of the invention is that the wheel fixing arrangement according to the invention is easy to maintain and also to keep clean. The latter factor is important when the piece of furniture, such as a bed, should be used in hospital surroundings.

A particular advantage of the invention, when applied in a hospital bed, is that the frame structure together with the wheels is realized as a low structure. A hospital bed in which the wheel fixing arrangement according to the invention is particularly well suited represents a type where the bed frame is placed low, near the floor level, and where the wheels are fixed in connection with said frame. The sleeping platform is connected to the bed frame by a suitable hoisting device, such as an articulated jack. This kind of hospital bed is described for instance in the document FI 20070499 A.

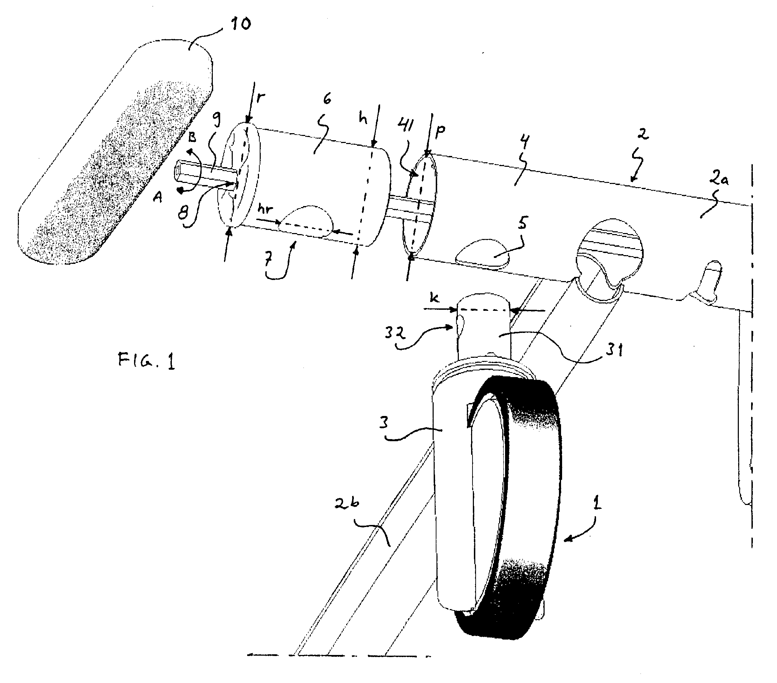

The invention and its other advantages shall be described in more detail below, with reference to the appended drawing, where
- Figure 1: illustrates a wheel fixing arrangement fitted in a hospital bed frame, seen in an exploded view, in an inclined direction from below, and

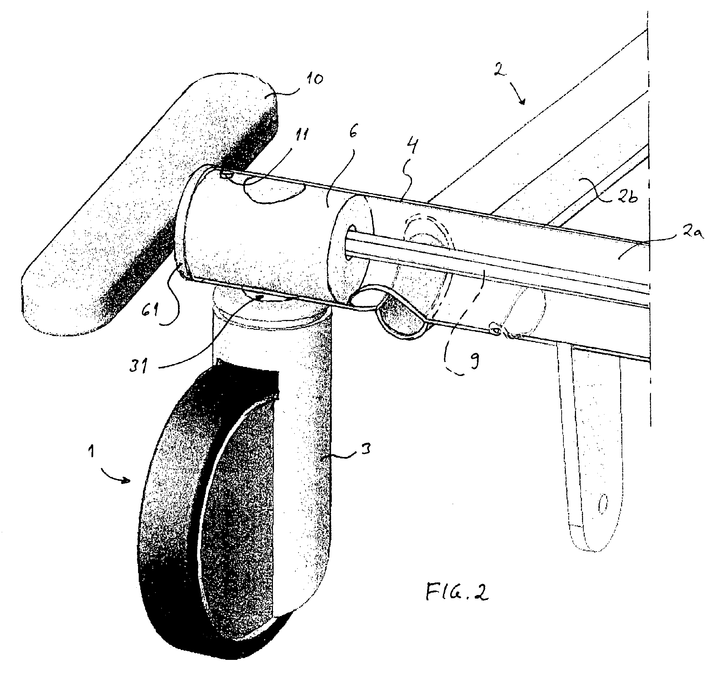

- Figure 2: illustrates a wheel fixing arrangement according to Figure 1, where the round tubular element is, for the sake of illustration, presented as a transparent structural element, and where the wheel fixing arrangement is observed in an inclined direction from above.

Like reference numbers for like parts are used in the drawings.

An advantageous wheel fixing arrangement according to the invention, applied in a hospital bed, is illustrated in the drawings.

The wheel 1 itself is fixed rotatably to a support arm 3, and together they form the wheel unit. A fastening support 31, which is advantageously round in cross-section and cylindrical, is arranged in the support arm 3, so that it protrudes therefrom. Through the fastening support 31, at right angles to its lengthwise axis, there is arranged a hole 32. In connection with the fastening support 31 and the hole 32, there are provided locking means (not illustrated) for locking and releasing the rotation of the wheel 1. It is pointed out that the above described wheel units are commercially available.

The wheel 1 is turnably fixed in the frame 2 of a piece of furniture, particularly a hospital bed (or in the lower part of the frame in general) by a wheel fixing arrangement according to the invention.

In the wheel fixing arrangement according to the drawings, the frame 2 is provided with a round tubular element 4, the end 41 of which is open. The tubular element 4 is preferably an element belonging to the frame 2, for instance part of the head 2a of the lower element of the hospital bed, to which the two long side elements 2b of the frame are connected. As an alternative, the tubular element 4 is a separate element connected to the frame 2 and provided for the fixing of the wheel. A first hole 5 that has a circular borderline is arranged in the casing of the tubular element 4, particularly in its lower part, and thus to be opened downwards. In addition, the hole 5 is advantageously arranged in the vicinity of the open end 41 of the tubular element, for instance at the distance of 4 - 8 cm from the end 41.

The wheel fixing arrangement includes a sleeve element 6. The sleeve element 6 is arranged coaxially inside the round tubular element 4, through its open end 41. The sleeve element 6 includes, at right angles to its lengthwise axis (and advantageously also to its center axis), a second hole 7, which is advantageously round in cross-section and thus circular in shape. A second hole 7 extends preferably through the sleeve element. A wheel fastening support 31 is fitted through the first hole 5 of the tubular element 4 in the second hole 7 of the sleeve element 6.

The sleeve element 6 is preferably an elongate piece, and its cross-section and the measures connected to its cross-section essentially correspond to the cross-section of the inner part and measures of the tubular element. The sleeve element 6 is advantageously made of a uniform, solid material, preferably plastic. In shape, the sleeve element 6 is advantageously a cylindrical piece. As an alternative, the sleeve element is a tubular element, inside which, advantageously at the ends, there are provided suitable lids, plugs or in general fixed filler pieces.

On the center axis of the sleeve element 6 (or alternatively on the center axis of the tubular element and of the filler pieces arranged therein, and simultaneously on the center axis of the sleeve element) there is arranged a hole 8. A locking shaft 9 is fitted through the hole 8, and at the same time through the hole 32 of the wheel fastening support. Now the locking shaft 9 holds the wheel 1, together with its support arm 3, fastened to the tubular element 4 and the sleeve element 6. Moreover, the locking shaft 9 is in cooperation with the wheel locking system, so that by turning the locking shaft 9 in one direction A, the wheel 1 is locked in a non-rotary state, and respectively by turning it in the opposite direction B, the wheel 1 is again released to a rotary state.

In a preferred embodiment of the invention, the diameter h of the sleeve element 6 is as long as or slightly longer than the inner diameter p of the tubular element 4. Now the coaxial fitting of the sleeve element 6 in the tubular element 4 is tight, and there is not left any remarkable clearing in between. Thus the wheel 1 is fixed in place in the frame 2 precisely, without a clearing, and the sleeve element cannot move in the tubular element.

In another preferred embodiment of the invention, the diameter hr of the second hole 7 of the sleeve element 6 is as long as or slightly longer than the outer diameter k of the wheel fastening support 31. Now the fitting of the wheel fastening support 31 in the second hole 7 of the sleeve element is relatively tight, and there is not left any remarkable clearing in between. Consequently the wheel 1 is fixed precisely in place in the frame 2 at the fastening support 31, and the fastening support 31 cannot move in the second hole 7 of the sleeve element.

In a third preferred embodiment of the invention, the first end of the sleeve element 6 is provided with a bracket 61 protruding outwardly from the center axis of the sleeve element. This is advantageously an annular bracket with a diameter r that is longer than the inner diameter of the tubular element 4 and also longer than the diameter h of the sleeve element to be fitted inside. Now the measures of the sleeve element 6 are advantageously designed so that the distance of the second hole 7 from the bracket 61 is as long as the distance of the first hole 5 from the open end 41 of the tubular element 4.

When the sleeve element 6 in the assembly stage of the wheel fixing arrangement is pushed inside the tubular element 4, so that the bracket 61 rests against the open end 41 of the tubular element 4 (and when the sleeve element 6 is possibly suitably turned), the second hole 7 of the sleeve element 6 and the first hole 5 of the tubular element are set precisely against each other. Otherwise the mutual fitting of the holes 5, 7 against each other would be remarkably more troublesome. When the holes 5, 7 are set against each other, the wheel fastening support 31 is pushed through the first hole 5, in place in the second hole 7 of the sleeve element 6, after which the locking shaft 9 is pushed through the hole 8 of the sleeve element 6 and through the hole 32 of the fastening support, to be set in place.

The sleeve element 6 can advantageously be locked (and respectively released) in place in the tubular element 4 for instance by a screw 11 that is arranged to pass through the tubular element 4 to the sleeve element 6.

In a fourth preferred embodiment of the invention, the locking shaft 9, and particularly its free protruding end, is provided with a pedal 10 for turning the locking shaft 9 around its axis. The pedal 10 is realized for instance as a flat, transversal shaft element.

In a fifth preferred embodiment of the invention, the locking shaft 9 is hexagonal in cross-section. In general, the locking shaft 9 is polygonal in cross-section, at least for the part that is in contact with the wheel fastening support 31, and particularly with the hole 32 provided therein. In connection with the fastening support 31 and the hole 32, there are arranged locking means, which are manipulated by turning the locking shaft and by means of its cross-sectional shape.

The locking shaft 9 is advantageously arranged to proceed through sleeves 6 and fastening supports 31 belonging to two wheel fixing arrangements, when the tubular elements 4 of the fixing arrangements are elements belonging to the frame 2 and being arranged on the same lengthwise axis, for example tubular elements arranged at both ends of the hospital bed head 2a.

In the description above, the invention is explained as applied in a hospital bed, and particularly in a hospital bed where the frame 2 includes a round tubular element 4. It is, however, pointed out that in cross-section, the tubular element 4 can be, apart from circular, also a polygon, for instance a quadrangle, in which case also the cross-section of the sleeve element 6 is a respective polygon or the like.

The wheel fixing arrangement according to the invention is suited for fixing the wheels of a bed, particularly a hospital bed, but the wheel fixing arrangements can also be applied for the fixing of wheels in other types of movable furniture, particularly hospital equipment. This kind of equipment includes for example operational tables and various movable auxiliary tables.

The invention is not restricted only to include the above described preferred embodiment, but many changes are possible without departing from the inventive idea defined in the appended claims.

## Claims

1. A wheel fixing arrangement, by means of which a wheel (1) is turnably fixed to the frame (2) of a movable piece of furniture, particularly a hospital bed; said wheel (1) is connected to a support arm (3) provided with a fastening support (31) and a hole (32) arranged therethrough, and in connection with said fastening support and hole, there are arranged locking means for locking and releasing the rotation of the wheel, **characterized in that** in the wheel fixing arrangement:
- the frame (2) is provided with a tubular element (4), the end (41) of which is open, and in which there is arranged a first hole (5) for the wheel fastening support (31);
- the wheel fixing arrangement includes a sleeve element (6), which is arranged coaxially inside the tubular element (4), said sleeve element (6) being provided, at right angles to the center axis of the sleeve element, a second hole (7) for the wheel fastening support (31), in which the fastening support (31) is fitted through the first hole 5; and
- a locking shaft (9) is arranged on the center axis of the sleeve element (6), so that it proceeds through the hole (32) of the wheel fastening support; the locking shaft (9) is in cooperation with the wheel locking means, so that by turning the locking shaft (9) in one direction (A), the wheel (1) is locked in a non-rotary state, and respectively by turning it in the opposite direction (B), the wheel (1) is again released to rotary state.

2. A wheel fixing arrangement according to claim 1, **characterized in that** the sleeve element (6) is a piece made of a uniform, solid material, advantageously plastic, and that in the center axis of the sleeve element (6), there is arranged a hole (8) for the locking shaft (9).

3. A wheel fixing arrangement according to claim 1 or 2, **characterized in that** the diameter (h) of the sleeve element (6) is as long as or slightly shorter than the inner diameter (p) of the tubular element (4).

4. A wheel fixing arrangement according to claim 1, 2 or 3, **characterized in that** the diameter (hr) of the second hole (7) of the sleeve element (6) is as long as or slightly longer than the outer diameter (k) of the wheel fastening support (31).

5. A wheel fixing arrangement according to any of the preceding claims, **characterized in that** the first end of the sleeve element (6) is provided with a bracket (61), such as an annular bracket, having a diameter (r) that is longer than the inner diameter of the tubular element (4).

6. A wheel fixing arrangement according to any of the preceding claims, **characterized in that** the locking shaft (9) is provided with a pedal (10) for turning the locking shaft around its axis.

7. A wheel fixing arrangement according to any of the preceding claims, **characterized in that** the locking shaft (9) is hexagonal in cross-section.

## Patentansprüche

1. Radbefestigungsanordnung, mittels welcher ein Rad (1) an einem Rahmen (2) eines beweglichen Möbelstücks, insbesondere eines Krankenhausbetts, drehbar befestigt ist; wobei das Rad (1) mit einem Trägerarm (3) verbunden ist, welcher mit einem Befestigungsträger (31) und einem dort hindurch angeordneten Loch (32) bereitgestellt ist, und wobei in Verbindung mit dem Befestigungsträger und dem Loch Arretiermittel angeordnet sind, zum Arretieren und Freigeben der Drehung des Rads, **dadurch gekennzeichnet, dass** in der Radbefestigungsanordnung:
- der Rahmen (2) mit einem rohrförmigen Element (4) bereitgestellt ist, dessen Ende (41) offen ist und in welchem ein erstes Loch (5) für den Radbefestigungsträger (31) angeordnet ist;
- die Radbefestigungsanordnung ein Hülsenelement (6) umfasst, welches innerhalb des rohrförmigen Elements (4) koaxial angeordnet ist, wobei das Hülsenelement (6) rechtwinklig zur Mittelachse des Hülsenelements mit einem zweiten Loch (7) für den Radbefestigungsträger (31) bereitgestellt ist, in welches der Befestigungsträger (31) durch das erste Loch (5) angepasst wird; und
- eine Arretierwelle (9) an der Mittelachse des Hülsenelements (6) angeordnet ist, so dass sie durch das Loch (32) des Radbefestigungsträgers hindurch geht; wobei die Arretierwelle (9) mit den Radarretiermitteln derart zusammenwirkt, dass durch Drehen der Arretierwelle (9) in eine Richtung (A) das Rad (1) in einem nicht-drehbaren Zustand arretierrt wird, und beziehungsweise durch Drehen der Arretierwelle in die Gegenrichtung (B) das Rad (1) wieder in dem drehbaren Zustand freigegeben wird.

2. Radbefestigungsanordnung nach Anspruch 1, **dadurch gekennzeichnet, dass** das Hülsenelement (6) ein aus einem gleichmäßigen, festen Material, vorteilhafterweise Kunststoff, hergestelltes Stück ist, und dass in der Mittelachse des Hülsenelements (6) ein Loch (8) für die Arretierwelle (9) angeordnet ist.

3. Radbefestigungsanordnung nach Anspruch 1 oder 2, **dadurch gekennzeichnet, dass** der Durchmesser (h) des Hülsenelements (6) gleich lang wie oder geringfügig kürzer als der Innendurchmesser (p) des rohrförmigen Elements (4) ist.

4. Radbefestigungsanordnung nach Anspruch 1, 2 oder 3, **dadurch gekennzeichnet, dass** der Durchmesser (hr) des zweiten Lochs (7) des Hülsenelements (6) gleich lang wie oder geringfügig länger als der Außendurchmesser (k) des Radbefestigungsträgers (31) ist.

5. Radbefestigungsanordnung nach einem der vorhergehenden Ansprüche, **dadurch gekennzeichnet, dass** das erste Ende des Hülsenelements (6) mit einem Bügel (61), wie beispielsweise einem ringförmigen Bügel, bereitgestellt ist, welcher einen Durchmesser (r) aufweist, der länger als der Innendurchmesser des rohrenförmigen Elements (4) ist.

6. Radbefestigungsanordnung nach einem der vorhergehenden Ansprüche, **dadurch gekennzeichnet, dass** die Arretierwelle (9) mit einem Pedal (10) bereitgestellt ist, um die Arretierwelle um ihre Achse zu drehen.

7. Radbefestigungsanordnung nach einem der vorhergehenden Ansprüche, **dadurch gekennzeichnet, dass** die Arretierwelle (9) einen hexagonalen Querschnitt aufweist.

## Revendications

1. Agencement de fixation de roue, à l'aide duquel une roue (1) est fixée, de façon à pouvoir tourner, au châssis (2) d'un meuble mobile, en particulier un lit d'hôpital ; ladite roue (1) étant reliée à un bras de support (3) muni d'un support de fixation (31) et d'un trou (32) situé à travers celui-ci, et, en association avec ledit support de fixation et ledit trou, sont disposés des moyens de verrouillage pour verrouiller et libérer la rotation de la roue, **caractérisé en ce que**, dans l'agencement de fixation de roue :
- le châssis (2) comporte un élément tubulaire (4), dont l'extrémité (41) est ouverte, et dans lequel est situé un premier trou (5) pour le support de fixation de roue (31) ;
- l'agencement de fixation de roue comprend un élément de manchon (6), qui est disposé de façon coaxiale à l'intérieur de l'élément tubulaire (4), ledit élément de manchon (6) comportant, à angle droit par rapport à l'axe central de l'élément de manchon, un deuxième trou (7) pour le support de fixation de roue (31), dans lequel le support de fixation (31) est adapté à travers le premier trou (5) ; et
- un arbre de verrouillage (9) est disposé sur l'axe central de l'élément de manchon (6), de telle sorte qu'il passe à travers le trou (32) du support de fixation de roue ; l'arbre de verrouillage (9) étant en coopération avec les moyens de verrouillage de roue, de telle sorte que, par la rotation de l'arbre de verrouillage (9) dans une direction (A), la roue (1) soit verrouillée dans un état de non rotation, et que, respectivement, par la rotation de celui-ci dans la direction opposée (B), la roue (1) soit à nouveau libérée dans l'état de rotation.

2. Agencement de fixation de roue selon la revendication 1, **caractérisé en ce que** l'élément de manchon (6) est une pièce constituée par un matériau plein uniforme, de façon avantageuse une matière plastique, et **en ce que**, dans l'axe central de l'élément de manchon (6), est situé un trou (8) pour l'arbre de verrouillage (9).

3. Agencement de fixation de roue selon la revendication 1 ou 2, **caractérisé en ce que** le diamètre (h) de l'élément de manchon (6) est aussi long ou légèrement plus court que le diamètre intérieur (p) de l'élément tubulaire (4).

4. Agencement de fixation de roue selon la revendication 1, 2 ou 3, **caractérisé en ce que** le diamètre (hr) du deuxième trou (7) de l'élément de manchon (6) est aussi long ou légèrement plus long que le diamètre extérieur (k) du support de fixation de roue (31).

5. Agencement de fixation de roue selon l'une quelconque des revendications précédentes, **caractérisé en ce que** la première extrémité de l'élément de manchon (6) est munie d'un étrier (61), tel qu'un étrier annulaire, ayant un diamètre (r) qui est plus long que le diamètre intérieur de l'élément tubulaire (4).

6. Agencement de fixation de roue selon l'une quelconque des revendications précédentes, **caractérisé en ce que** l'arbre de verrouillage (9) est muni d'une pédale (10) pour faire tourner l'arbre de verrouillage autour de son axe.

7. Agencement de fixation de roue selon l'une quelconque des revendications précédentes, **caractérisé en ce que** l'arbre de verrouillage (9) a une section transversale hexagonale.
